# EUROPÄISCHE PATENTSCHRIFT

(11) **EP 2 654 199 B1**
(45) Veröffentlichungstag und Bekanntmachung des Hinweises auf die Patenterteilung: **02.08.2017**
(21) Anmeldenummer: 12164596.4
(22) Anmeldetag: 18.04.2012
(51) Int. Cl.: H02P 21/00

(54) **Verfahren und Vorrichtung zum Stabilisieren einer elektrischen Spannung mittels einer feldorientierten Regelung**
Method and device for stabilising an electric current using a field-oriented control system
Procédé et dispositif de stabilisation d'une tension électrique au moyen d'une régulation orientée champ

(43) Veröffentlichungstag der Anmeldung: 23.10.2013
(73) Patentinhaber: Siemens Aktiengesellschaft, 80333 München (DE)
(72) Erfinder: Benesch, Norbert, Dr., 90562 Heroldsberg (DE); Kubik, Alexander, 91058 Erlangen (DE); Stoiber, Dietmar, 90763 Fürth (DE); Wedel, Bernd, 91096 Möhrendorf (DE)

(56) Entgegenhaltungen:
- JP-A- 2000 278 982
- US-A1- 2009 256 518
- US-A1- 2011 038 192
- HANSEN A D ET AL: "Multi-pole permanent magnet synchronous generator wind turbines' grid support capability in uninterrupted operation during grid faults", IET RENEWABLE POWER GENERATION,, Bd. 3, Nr. 3, 8. September 2009 (2009-09-08), Seiten 333-348, XP006033760, ISSN: 1752-1424, DOI: 10.1049/IET-RPG:20080055

## Beschreibung

Die Erfindung betrifft ein Verfahren und eine Schaltungsanordnung zum Stabilisieren einer elektrischen Spannung in einem Zwischenkreis, in welchen eine gleichgerichtete Spannung eingespeist und an welchem eine elektrische Maschine betrieben wird.

In Fertigungs- und Prozessanlagen kann vorgesehen sein, die elektrischen Verbraucher, wie etwa elektrische Motoren zum Antreiben von Fließbändern, Walzen oder Pumpen, über ein Gleichspannungsnetz mit elektrischer Energie zu versorgen. Dieses Gleichspannungsnetz wird Zwischenkreis genannt, da es sich zwischen einerseits einer Einspeiseeinrichtung zum Einspeisen einer gleichgerichteten Spannung aus einem elektrischen Versorgungsnetz (z.B. einem dreiphasigen 50 Hz, 400 V Wechselspannungs-Versorgungsnetz) und andererseits den elektrischen Verbrauchern befindet. Die Einspeiseeinrichtung erzeugt die gleichgerichtete Spannung mittels eines Gleichrichters, sodass der zeitliche Spannungsverlauf noch eine Restwelligkeit aufweisen kann. In dem Zwischenkreis ist deshalb in der Regel zumindest ein Zwischenkreiskondensator bereitgestellt, dessen Kapazität ausreichend groß ist, um einerseits diese Restwelligkeit zu glätten und andererseits bei einem spontanen Leistungsbedarf eines elektrischen Verbrauchers, beispielsweise beim Anfahren eines Elektromotors, den sprunghaften Anstieg des Energiebedarfs decken zu können.

Je nach Größe der Anlage kann es sich bei der Gleichspannungsversorgung um ein mehr oder weniger weit verzweigtes Netz von Gleichspannungsleitungen handeln. Die Leitungsinduktivität ergibt dabei zusammen mit den Zwischenkreiskondensatoren einen Sperrkreis, der bei seiner Resonanzfrequenz eine hohe Impedanz aufweisen kann. Dies kann in Verbindung mit dem elektrischen Verhalten vieler Verbraucher im Zwischenkreis zu einem unerwünschten Effekt führen: Handelt es sich beispielsweise bei einem Verbraucher um einen Drehstrommotor, so ist dieser in der Regel über einen Wechselrichter an den Zwischenkreis gekoppelt, welcher aus der gleichgerichteten Spannung des Zwischenkreises eine mehrphasige Wechselspannung zum Erzeugen des Drehstroms für den Motor bildet. Die Schaltfrequenzen des Wechselrichters können dabei im Bereich der Resonanzfrequenz des Zwischenkreises und darüber liegen. Zudem verhält sich ein leistungselektronischer Verbraucher, wie ein Wechselrichter zum Betrieb eines Drehstrommotors, oftmals wie ein Bauelement mit negativer Eingangsimpedanz. Ursächlich dafür ist z.B. die Wechselrichter-Stromregelung, die bei sinkender Gleichspannung am Anschlusspunkt des Wechselrichters am Zwischenkreis als Reaktion darauf den Eingangsstrom für den Motor vergrößert, um die vom Motor abgegebene Leistung konstant zu halten. Eine solche Stromerhöhung bei einer Spannungsabnahme (und umgekehrt die Stromsenkung bei steigender Spannung) entspricht dem Verhalten eines Bauteils mit negativer Eingangsimpedanz. Es ergibt sich daher nicht die stabilisierende, d.h. dämpfende Wirkung eines normalen ohmschen Widerstands (positive Eingangsimpedanz), was in Kombination mit dem Resonanzverhalten und der damit verbundenen hohen Ausgangsimpedanz des Zwischenkreises zu einer Destabilisierung der Zwischenkreisspannung führen kann.

Allgemein ergibt sich das beschriebene Problem in der Regel in einem Zwischenkreis, in welchem von einem Erzeuger eine gleichgerichtete Spannung erzeugt und an welchem ein elektrischer Verbraucher betrieben wird, wobei der Erzeuger und der Verbrauch elektrische Energie austauschen. Ein Erzeuger kann hierbei die beschriebene Einspeiseeinrichtung sein oder aber auch ein Generator oder auch eine Batterie. Erzeugerseitig können Resonanzprobleme auftreten, falls der Erzeuger die gleichgerichtete Spannung über schnell schaltende Schaltelemente oder Ventile (Dioden) an den Zwischenkreis abgibt. Im Falle der Batterie kann dies durch einen Schaltwandler, z.B. durch einen DC-DC-Wandler, geschehen. Elektrische Verbraucher, welche die Resonanzprobleme hervorrufen können, sind z.B. Elektromotoren, die über steuerbare Wechselrichter am Zwischenkreis betrieben werden. Ansonsten kommen aber auch andere elektrische Verbraucher in Frage, bei denen elektrische Energie in ähnlicher Weise in schnellen Schaltfolgen aus dem Zwischenkreis entnommen wird. Ein an dem Zwischenkreis betriebenes Gerät kann auch zeitweise als Verbraucher und zeitweise als Erzeuger wirken, wie dies beispielsweise bei einer elektrischen Maschine durch einen abwechselnden Motor- und Generatorbetrieb oder bei einem Akkumulator durch Aufladen und Entladen möglich ist.

Um die resonanzbedingten Probleme bei der Energieübertragung zu verhindern, muss in der Regel für einen stabilen Betrieb der Gleichspannungsversorgung die Regelung der Erzeuger und/oder der Verbraucher angepasst sein. Bei Motoren kann dies in der Weise erfolgen, dass die von den Motoren entnommene Leistung stark reduziert wird, wenn ein Absinken der Gleichspannung im Zwischenkreis erkannt wird. Nachteilig bei diesem Vorgehen ist die Rückwirkung eines solchen Dämpfungsalgorithmus auf das Drehmoment des angeschlossenen Motors und damit auch auf den mit dem Motor verbundenen Prozess, indem also beispielsweise die Drehgeschwindigkeit einer Druckwalze in einer Druckmaschine verändert wird. Für diese und viele weitere Anwendungen ist dies aber nicht akzeptabel.

Als alternative Lösung kann vorgesehen sein, anstelle des Zwischenkreises das dreiphasige Versorgungsnetz selbst in einer Fertigungsanlage zu verlegen und für jeden räumlich verteilten Verbraucher eine eigene Einspeiseeinheit vorzusehen.

Aus der US 2011/0038192 A1 ist es bekannt, einen gesteuerten Gleichrichter zur Versorgung eines Gleichstromzwischenkreises aus einem Wechselspannungsnetz vorzusehen. Der Gleichrichter wird derart gesteuert, dass ein hoher Leistungsfaktor erreicht werden kann. Zugleich wird eine gleichspannungsseitige Überspannung durch entsprechendes Steuern vermieden.

Eine Aufgabe der vorliegenden Erfindung ist, ein schwingungsfähiges Gleichspannungsnetz stabil zu betreiben, auch wenn beispielsweise Wechselrichter mit hohen Schaltfrequenzen daran betrieben werden, wobei von der Stabilisierung kein störender Einfluss auf Prozesse ausgehen soll, die von Motoren angetriebenen werden, die von den Wechselrichtern versorgt werden.

Die Aufgabe wird durch ein Verfahren gemäß Patentanspruch 1 sowie durch eine Schaltungsanordnung gemäß Patentanspruch 9 gelöst. Vorteilhafte Weiterbildungen der Erfindung sind durch die Unteransprüche gegeben.

Grundlegende Idee der Erfindung ist, an einem Anschlusspunkt im Zwischenkreis einen DC-AC-Wechselrichter (DC-Gleichstrom, AC-Wechselstrom) derart zu betreiben, dass durch eine geregelte Leistungsentnahme aus dem Zwischenkreis über dem Wechselrichter Schwingungen in einem zeitlichen Verlauf der gleichgerichteten Spannung des Zwischenkreises gedämpft werden. Diese Dämpfung der Schwingungen verhindert, dass elektrische Energie z.B. von einer Einspeiseeinrichtung eines Zwischenkreises zu den elektrischen Verbrauchern durch Wechselströme mit einer Frequenz im Bereich der Resonanzfrequenz des Zwischenkreises übertragen wird. Der Zwischenkreis wirkt somit in einem verringerten Maße als Sperrkreis, und es kann eine größere Energiemenge von der Einspeiseeinrichtung zu den Verbrauchern übertragen werden. Das erfindungsgemäße Verfahren nutzt zum Dämpfen der Schwingungen eine elektrische Maschine, die an dem Zwischenkreis betrieben wird. Bei dieser elektrischen Maschine wird auf der Grundlage einer feldorientierten Regelung, die auch Vektorregelung genannt wird, ein Statorstrom der elektrischen Maschine eingestellt. Durch die feldorientierte Regelung werden hierbei in der bekannten Weise einerseits eine q-Komponente des Statorstroms, die das von der elektrischen Maschine erzeugte Drehmoment bestimmt, und andererseits eine senkrecht zur q-Komponente ausgerichtete d-Komponente des Statorstroms unabhängig voneinander eingestellt. Das Einstellen des Statorstroms erfolgt bei dem erfindungsgemäßen Verfahren durch eine entsprechende Regelungseinrichtung, wie sie zum Betrieb einer elektrischen Maschine an sich aus dem Stand der Technik bekannt ist. Ein weiterer Schritt des erfindungsgemäßen Verfahrens besteht im Ermitteln einer Schwingung in einem zeitlichen Verlauf der Spannung des Zwischenkreises durch eine dafür entsprechend bereitgestellte Messeinrichtung. Um nun eine für die Stabilität der Zwischenkreisspannung kritische Schwingung zu dämpfen, wird in einem weiteren Schritt des Verfahrens bei der feldorientierten Regelung ein Sollwertverlauf für die d-Komponente des Statorstroms in Abhängigkeit von der ermittelten Schwingung mittels eines Reglers der Regelungseinrichtung festgelegt, welcher dazu ausgelegt ist, die Schwingung zu dämpfen. Hierbei kann es sich z.B. um einen PID-Regler handeln oder eine beliebige Unterklasse davon, also z.B. einen PD-Regler. Wie ein solcher für eine Schwingungsdämpfung auszulegen ist, ist an sich aus dem Stand der Technik bekannt. Prinzip hierbei ist, dass innerhalb einer Schwingungsperiode bei steigender Spannung dem Zwischenkreis auch mehr Energie entzogen und im Widerstand der Statorwicklungen in Wärme umgesetzt wird. Das Verhalten der elektrischen Maschine entspricht im Bereich der Schwingungsfrequenz somit dem eines ohmschen Verbrauchers. Die Regelungseinrichtung und die Statorwicklungen bilden somit insgesamt einen aktiven Zwischenkreisdämpfer, der die auftretenden Schwingungen der Zwischenkreisspannungen bedämpft.

Das erfindungsgemäße Verfahren weist den Vorteil auf, dass zum Bedämpfen der Schwingungen und damit zum Vergrößern der zwischen einem elektrischen Verbraucher und dem Zwischenkreis austauschbaren Leistung keine zusätzlichen Schaltungskomponenten bereitgestellt werden müssen, da einfach eine Regelung einer bereits an den Zwischenkreis angeschlossenen elektrischen Maschine angepasst werden muss. Indem die Regelung der d-Komponente des Statorstroms dieser elektrischen Maschine verändert wird, um die Schwingungen der Zwischenkreisspannungen zu bedämpfen, hat dies auch keine Auswirkung auf das von der elektrischen Maschine erzeugte Drehmoment bzw. (im Falle eines Linearmotors) auf deren Schubkraft, sondern es werden nur die ohmschen Verluste in den Motorwicklungen beeinflusst. Die Erfindung beruht hierbei auf der Erkenntnis, dass die d-Komponente unabhängig von der q-Komponente des Statorstromes einstellbar ist und nur die q-Komponente des Statorstromes zur Drehmoment - bzw. Krafterzeugung einer elektrischen Maschine beiträgt. Die im Zusammenhang mit der Bedämpfung der Schwingungen in dem Zwischenkreis aus diesem entnommene elektrische Leistung führt somit nur zu ohmschen Verlusten in der elektrischen Maschine und hat keinen Einfluss auf die Drehzahl oder das Drehmoment bzw. die Geschwindigkeit oder die Schubkraft der elektrischen Maschine.

Bevorzugt wird das erfindungsgemäße Verfahren in einer Produktionsmaschine implementiert, bei welcher die elektrische Maschine einen Nebenantrieb darstellt und eine weitere, ebenfalls über den Zwischenkreis versorgte elektrische Maschine den eigentlichen Hauptantrieb bildet. Beispiel hierfür ist eine Werkzeugmaschine, bei welcher durch einen Hauptantrieb ein zu fertigendes Werkstück bzgl. eines Werkzeugs hochgenau, d. h. mit einer geringen Toleranz, positioniert werden muss. Solche Werkzeugmaschinen weisen in der Regel Nebenantriebe auf, wie z.B. eine Pumpe zum Fördern eines Kühlmittels. Ein Nebenantrieb zeichnet sich dabei dadurch aus, dass dessen Betriebsgrößen, wie etwa eine Drehlage des Rotors oder ein Drehmoment oder eine Schubkraft oder eine Drehzahl, mit einer größeren Toleranz eingestellt werden können als es für die entsprechende Betriebsgröße des Hauptantriebs zulässig ist. Ein solcher Nebenantrieb kann dann als die elektrische Maschine verwendet werden, die auch zum Dämpfen von der Schwingungen der Zwischenkreisspannung verwendet wird. Hierbei ergibt sich der Vorteil, dass der Nebenantrieb in derselben Produktionsmaschine, d.h. in örtlicher Nähe des Hauptantriebs, angeordnet ist. Mit anderen Worten liegen die Anschlüsse der beiden Antriebe im Verhältnis zur Länge der Leitungen des Zwischenkreises nahe beieinander, sodass durch den Nebenantrieb die Spannungsversorgung für den Hauptantrieb besonders effizient stabilisiert wird.

Eine weitere Ausführungsform des erfindungsgemäßen Verfahrens sieht vor, durch die Regelungseinrichtung den Sollwert für die d-Komponente des Statorstroms mit einer Frequenz zu verändern, die in einem Frequenzbereich über 100 Hz, insbesondere über 1000 Hz, liegt. Durch ein sich hierdurch ergebendes derart schnelles Verändern des Betrags des Statorstromes werden entsprechend auch Schwingungen des Spannungsverlaufs im Zwischenkreis in diesem Frequenzbereich besonders effizient gedämpft.

Regler von Regeleinrichtungen können eine frequenzabhängige Regelempfindlichkeit aufweisen, d.h. je nach Änderungsgeschwindigkeit, mit der sich das Signal der Differenz zwischen Ist-Größe und Sollwert verändert, wird durch den Regler die Stellgröße mit unterschiedlichem Betrag ermittelt. Der Frequenzgang des Regelkreises beschreibt diesen Zusammenhang quantitativ. Die Regelungseinrichtung weist entsprechend bevorzugt einen Regler auf, der frequenzselektiv auf die Resonanzfrequenz des Zwischenkreises abgestimmt und somit dazu ausgelegt ist, in einem zeitlichen Verlauf der Spannung des Zwischenkreises Schwingungen bei der Resonanzfrequenz zu dämpfen, also Abweichungen von einem Mittelwert der gleichgerichteten Spannung auszugleichen. Bei einem solchen Regler kann durch entsprechende Verzögerungsglieder und weitere, an sich bekannte Maßnahmen festgelegt werden, bei welcher Frequenz die Regelempfindlichkeit am größten ist. Die Abstimmung muss nicht exakt erfolgen. Insbesondere ist hier unter der frequenzselektiven Abstimmung zu verstehen, dass der Frequenzgang des offenen Regelkreises eine Resonanz in einem Frequenzbereich aufweist, der sich von 50% der Zwischenkreisresonanzfrequenz bis 200% der Zwischenkreisresonanzfrequenz erstreckt.

Im Zusammenhang mit der Ermittlung der Schwingungen in der Zwischenkreisspannung sieht eine Ausführungsform des erfindungsgemäßen Verfahrens vor, die Schwingungen nicht unmittelbar an einem Signal des zeitlichen Verlaufs der Zwischenkreisspannung selbst, sondern in einem durch ein Hochpassfilter oder ein Bandpassfilter gefiltertes Signal des Verlaufs der Zwischenkreisspannung zu ermitteln. Hierdurch ergibt sich der Vorteil, dass die Dämpfung nur für Schwingungen der Zwischenkreisspannung wirkt, die Frequenzen innerhalb eines bestimmten Frequenzbereichs aufweisen. So wird entsprechend auch für den Fall, dass keine Schwingungen in diesem Frequenzbereich vorliegen, auch die d-Komponente des Statorstroms nicht durch das Verfahren verändert.
Eine weitere Einsatzmöglichkeit des erfindungsgemäßen Verfahrens ist im Falle einer ungeregelten Einspeisung gegeben, durch welche die gleichgerichtete Zwischenkreisspannung aus einer Wechselspannung eines Versorgungsnetzes mittels einer netzgeführten Gleichrichtung, z.B. mittels Diodenhalbbrücken, erzeugt wird. Die gleichgerichtete Spannung weist in diesem Fall eine deutlich ausgeprägte sechste Harmonische bzgl. der Netzgrundfrequenz auf, wenn es sich um ein dreiphasiges Versorgungsnetz handelt. Diese Harmonische stellt zwar keine Schwingung dar, die zu einer Instabilität des Zwischenkreises führen könnte, belastet jedoch die Komponenten im Zwischenkreis, indem etwa der Zwischenkreiskondensator ständig einen Wechselstrom dieser Frequenz mit den Leitungen des Zwischenkreises austauscht. Dies führt zu einer Erwärmung der Zwischenkreiskondensatoren und einer Beschleunigung ihrer Alterung. Eine Ausführungsform des erfindungsgemäßen Verfahrens sieht in diesem Zusammenhang deshalb vor, durch die Regelungseinrichtungen Schwingungen des Spannungsverlaufs der gleichgerichteten Spannung bei einer Harmonischen der Netzfrequenz des Versorgungsnetzes zu dämpfen, insbesondere bei einer sechsten Harmonischen im Falle eines dreiphasigen Versorgungsnetzes.
Besonders effizient bei der Dämpfung von Schwingungen ist eine Ausführungsform des erfindungsgemäßen Verfahrens, bei welcher als von der Regelungseinrichtung geregelte elektrische Maschine ein Synchronmotor für einen Direktantrieb verwendet wird. Solche Motoren weisen Statorwicklungen mit einem verhältnismäßig großen ohmschen Widerstand auf. Entsprechend effizient sind diese Wicklungen daher zum Dämpfen von Schwingungen. Erfindungsgemäß wird alternativ als die von der Regelungseinrichtung geregelte elektrische Maschine ein Asynchronmotor verwendet . Bei einem solchen Asynchronmotor lässt sich durch die d-Komponente des Statorstroms eine in einer d-Komponente eines magnetischen Drehfelds des Asynchronmotors gespeicherte Energiemenge einstellen. Innerhalb einer Schwingungsperiode lässt sich bei betragsmäßig kleiner werdender Zwischenkreisspannung somit Energie vom magnetischen Hauptfeld in den Zwischenkreis und bei betragsmäßig größer werdender Spannung Energie vom Zwischenkreis in das Hauptfeld übertragen. Hierdurch ergibt sich der Vorteil, dass zum Dämpfen von Schwingungen im Zwischenkreis Energie nicht in einem ohmschen Widerstand als Verlustwärme unwiederbringlich verloren geht, sondern dass die Energie zwischengespeichert wird, nämlich im magnetischen Hauptfeld der Asynchronmaschine, und von dort wieder zurück in den Zwischenkreis gespeist werden kann. Insgesamt verhält sich die Asynchronmaschine bezüglich der d-Komponente im Bereichs der Schwingungsfrequenz durchgehend wie ein ohmscher Verbraucher, da bei steigender Spannung effektiv mehr, bei sinkender Spannung effektiv weniger Energie aus dem Zwischenkreis entnommen wird. Dieses ohmsche Verhalten dämpft die Schwingungen, welche sich in dem Steigen und Absinken der Spannung äußern.

Zu der Erfindung gehört auch die Schaltungsanordnung nach Anspruch 9, bei welcher eine elektrische Maschine über einen Zwischenkreis mit einer Einspeiseeinrichtung gekoppelt ist, welche die gleichgerichtete Spannung in dem Zwischenkreis erzeugt. Erfindungsgemäß ist nun vorgesehen, in einer solchen Schaltungsanordnung eine Dämpfungseinrichtung bereitzustellen, welche die bereits beschriebene Messeinrichtung, mittels der eine Schwingung in einem zeitlichen Verlauf der gleichgerichteten Spannung des Zwischenkreises ermittelbar ist, sowie eine Regelungseinrichtung zum Regeln eines Statorstroms der elektrischen Maschine umfasst. Die Dämpfungseinrichtung ist dabei dazu ausgelegt, eine Ausführungsform des erfindungsgemäßen Verfahrens durchzuführen.

Gemäß einer Ausführungsform der erfindungsgemäßen Schaltungsanordnung handelt es sich bei der elektrischen Maschine um einen Linearantrieb für eine mechanische Schwingungsdämpfung eines Kranes. Ein solcher Linearantrieb dient zum Ausbalancieren des Kranes. Durch Betreiben dieses Linearantriebs mittels der Dämpfungseinrichtung lässt sich in einem Kran zusätzlich dessen Gleichstrom-Spannungsversorgung stabilisieren.

Eine andere Ausführungsform der erfindungsgemäßen Schaltungsanordnung ist Bestandteil einer Produktionsmaschine, bei welcher ein Elektromotor einen Hauptantrieb der Produktionsmaschine darstellt, welcher bezüglich einer Betriebsgröße, insbesondere einer Drehzahl, einem Drehmoment, einer Schubkraft oder einer Drehlage, für einen Betrieb mit einer vorbestimmten Genauigkeit ausgelegt ist. Bei dieser Produktionsmaschine ist vorgesehen, als elektrische Maschine, die von der beschriebenen Dämpfungseinrichtung geregelt wird, einen Nebenantrieb dieser Produktionsmaschine zu verwenden, die im Betrieb eine geringere Genauigkeit bzgl. der Betriebsgröße aufweist. Die Produktionsmaschine mit der erfindungsgemäßen Schaltungsanordnung weist den Vorteil auf, dass der Hauptantrieb mit einer stabilisierten Gleichspannung versorgt werden kann und hierbei die Stabilisierung durch die Dämpfungseinrichtung in der Produktionsmaschine selbst, also nahe an den Anschlüssen des Hauptantriebs am Zwischenkreis bereitgestellt ist.

Im Folgenden wird die Erfindung noch einmal anhand von Ausführungsbeispielen konkreter erläutert. Dazu zeigt:
- FIG 1: eine schematisiertes Schaltbild einer bevorzugten Ausführungsform der erfindungsgemäßen Schaltungsanordnung, in welcher eine elektrische Maschine gemäß einer bevorzugten Ausführungsform des erfindungsgemäßen Verfahrens betrieben wird, und
- FIG 2: ein Diagramm mit schematisierten Verläufen frequenzabhängiger Eingangsimpedanzen.

Bei dem im Folgenden erläuterten Beispiel stellen die Komponenten der Schaltungsanordnung und die beschriebenen Schritte des Verfahrens zur Stabilisierung der Zwischenkreisspannung jeweils einzelne, unabhängig voneinander zu betrachtenden Merkmale der Erfindung dar, welche die Erfindung jeweils auch unabhängig voneinander weiterbilden und damit auch einzeln und in einer anderen als der gezeigten Kombination als Bestandteil der Erfindung anzusehen sind.

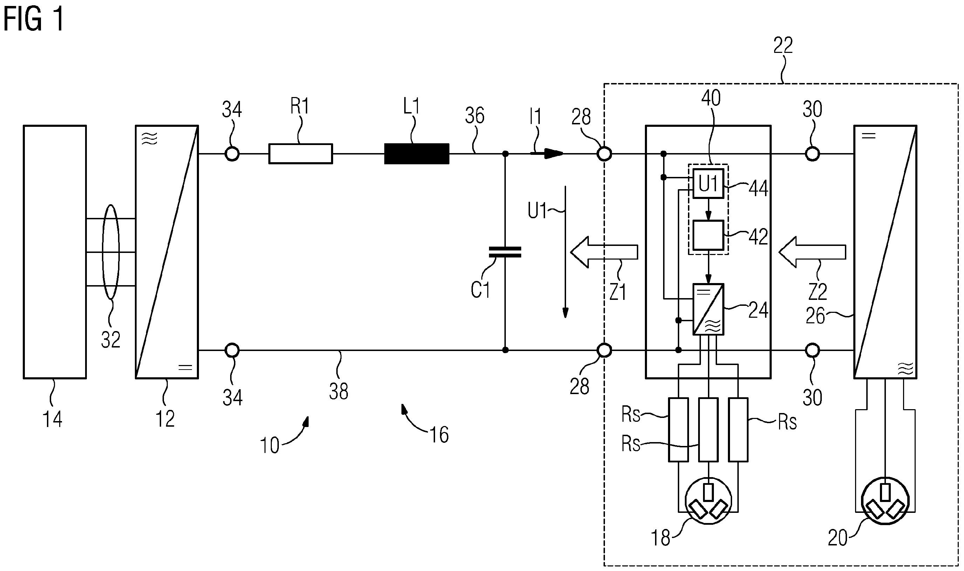

In FIG 1 ist eine Schaltungsanordnung 10 gezeigt, bei welcher eine Einspeiseeinrichtung 12 eine Wechselspannung eines Versorgungsnetzes 14 gleichrichtet und die gleichgerichtete Spannung in einen Zwischenkreis 16 einspeist, an welchem Elektromotoren 18, 20 betrieben werden. Zusätzlich zu oder anstelle von den Elektromotoren 18, 20 können noch weitere elektrische Verbraucher und auch elektrische Erzeuger an den Zwischenkreis 16 angeschlossen sein. Bei der Schaltungsanordnung 10 kann es sich beispielsweise um eine Produktionsanlage oder eine Prozessanlage, oder um eine elektrische Installation eines Krans handeln. Die Elektromotoren 18, 20 können Komponenten ein und derselben Fertigungsmaschine 22 sein. Die Elektromotoren 18, 20 werden über Wechselrichter 24, 26 betrieben. Die Wechselrichter 24, 26 empfangen hierzu elektrische Energie aus dem Zwischenkreis 16, an den sie über Gleichspannungsanschlüsse 28, 30 angeschlossen. Die elektrische Energie wird von der Einspeiseeinrichtung 12 aus dem Versorgungsnetz 14 empfangen. Die Einspeiseeinrichtung 12 kann beispielsweise ein Brücken-Gleichrichter sein, der aus Wechselspannungen mehrerer Phasenleiter 32 des Versorgungsnetzes 14 an einem Gleichspannungsausgang 34 die gleichgerichtete Zwischenkreisspannung zwischen Leitungen 36, 38 des Zwischenkreises 16 erzeugt.

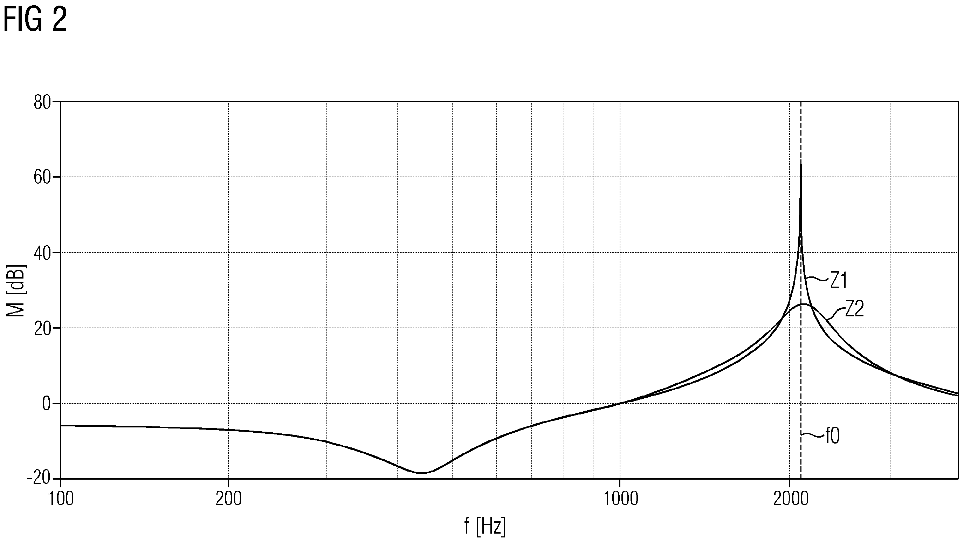

Die Leitungen 36, 38 sind verhältnismäßig lang, sodass ihre Leitungsinduktivität L1 im Verhältnis zu ihrem Leitungswiderstand R1 eine große Impedanz darstellt. Im Zwischenkreis 16 kann ein Kondensator C1 zur Pufferung der Zwischenkreisspannung bereitgestellt sein. Typischerweise ist der Kondensatoren C1 im Verhältnis zur Länge der Leitungen 36, 38 sehr nahe an den Elektromotoren 18, 20 angeordnet. Befinden sich die Elektromotoren 18, 20 nun relativ weit entfernt von der Einspeiseeinheit 12, so entsteht über die Leitungen 36, 38 mit der nicht mehr vernachlässigbaren Leitungsinduktivität L1 und dem Kondensator C1 ein schwingungsfähiges elektrisches System, nämlich ein Sperrkreis, was zu Stabilitätsproblemen an den Elektromotoren 18, 20 führen kann. Dies ist im Folgenden anhand von FIG 1 und FIG 2 erläutert. Aus Sicht des Gleichspannungsanschlusses 28 ergibt sich bezüglich der Anschlussklemmen 28 in Richtung zum Zwischenkreis 16 hin eine Eingangsimpedanz Z1, die frequenzabhängig ist und deren Verlauf über der Frequenz f beispielhaft in FIG 2 dargestellt ist, wobei in FIG 2 der Betrag M (Magnitude) der Impedanzen in Dezibel aufgetragen ist. Mit einer Eingangsimpedanz ist hierbei gemeint, dass hier nur die Impedanz desjenigen Teils der Schaltungsanordnung 10 gemessen wird, der sich in FIG 1 links der des Anschlusses befindet, für den die Eingangsimpedanz gemessen wird. Der Teil rechts des Anschlusses wird zum Ermitteln der Eingangimpedanz als nicht vorhanden angenommen. FIG 2 ist zu sehen, dass bei einer Resonanzfrequenz f0 die Eingangsimpedanz Z1 aus Sicht des Elektromotors 18 eine Resonanzüberhöhung aufweisen. In dem gezeigten Beispiel ergibt sich eine Resonanzfrequenz, die etwas größer als 2000 Hz ist. Der absolute Betrag M der Eingangsimpedanz Z1 kann beispielsweise ein Kiloohm (1 kΩ) betragen. Die Eingangsimpedanz Z1 ist hier ein begrenzender Faktor für die von der Einspeiseeinrichtung 12 zu den Elektromotoren 18, 20 übertragbaren elektrischen Leistung, wenn das elektrische Verhalten der Elektromotoren 18, 20 einer negativen Impedanz entspricht, weil z.B. die Wechselrichter 24, 26 der Elektromotoren 18, 20 gemäß einer Leistungsregelung betrieben werden.

Durch die Induktivität L1 und die Kapazitäten C1 wirkt der Zwischenkreis 16 zwischen den Gleichspannungsausgang 34 und dem Anschluss 28 wie ein Sperrkreis mit einer Resonanzüberhöhung bei der Resonanzfrequenz f0. Wenn eine Zwischenkreisspannung U1 durch Schaltvorgänge in den Wechselrichtern der Elektromotoren 18, 20 periodisch mit einer Frequenz f schwankt, so kann über den Zwischenkreis 16 von der Einspeiseeinrichtung 12 nur ein Strom I1 aus dem Zwischenkreis 16 entnommen werden, dessen Stromstärke sich durch das Verhältnis I1 = U1 / Z1 bestimmt. Aus dem Diagramm von FIG 2 geht hervor, dass der Strom I1 somit für schnelle Schaltvorgänge bei Schaltfrequenzen von größer als ungefähr 1000 Hz durch die Eingangsimpedanz Z1 beeinträchtigt ist.

In der Schaltungsanordnung 10 ist allerdings vermieden, dass insbesondere der Elektromotor 20 am Anschluss 30 eine Eingangsimpedanz Z2 in Bezug auf den Zwischenkreis 16 beobachtet, die eine solche Resonanzüberhöhung bei der Resonanzfrequenz f0 aufweist. Damit kann die von dem Elektromotor 20 mit dem Zwischenkreis 16 austauschbare Leistung erhöht werden, ohne beim Regeln des Betriebs des Elektromotors 20 von einem vorgegebenen Leistungssollwert abweichen zu müssen. Der Elektromotor 20 kann damit unabhängig von dem Resonanzverhalten des Zwischenkreises 16 stets mit dem gewünschten Leistungssollwert betrieben werden. Zur Dämpfung der Resonanzen in der Eingangsimpedanz Z2 ist in dem Zwischenkreis 16 ist für den Elektromotor 18 eine Dämpfungseinrichtung 40 bereitgestellt. Die Dämpfungseinrichtung 40 umfasst eine Regelungseinrichtung 42 für den Wechselrichter 24 und eine Messeinrichtung 44. Die Regelungseinrichtung 42 kann beispielsweise einen Mikrocontroller umfassen. Die Regelungseinrichtung 42 erzeugt in der bekannten Weise Schaltsignale für die Schaltelemente des Wechselrichters 24, welcher in dem Elektromotor 18 einen Drehstrom zum Erzeugen eines magnetischen Drehfelds erzeugt. Die Schaltsignale werden von der Regelungseinrichtung 42 gemäß einer vektororientierten Regelung erzeugt, wie sie an sich aus dem Stand der Technik bekannt ist. Bei der Regelungseinrichtung 42 wird nun zusätzlich für eine Regelung der d-Komponente des Statorstromes ein Regelungsalgorithmus ausgeführt, welcher Resonanzen im Zwischenkreis 16 aktiv bedämpft. Hierzu wird die Spannung U1 am Anschluss 28 durch die Messeinrichtung 44 in an sich bekannter Weise gemessen. Die Messeinrichtung 44 überträgt ein Signal der gemessenen Spannung an die Regelungseinrichtung 42. Hierbei kann vorgesehen sein, den gemessenen zeitlichen Verlauf zunächst mit einem Hochpassfilter oder einem Bandpassfilter zu filtern und nur das gefilterte Signal an die Regelungseinrichtung 42 zu übertragen. In dem gefilterten Signal sind dann nur Schwingungen der Spannung U1 bei bestimmten Frequenzen erkennbar. Die Regelungseinrichtung 42 weist einen frequenzselektiven Regler auf, der in Abhängigkeit von dem empfangenen Signal einen Sollwert für die d-Komponente des Statorstroms festlegt. Der Verlauf des Sollwerts gibt hierbei für die Frequenz der Schwingung bei ansteigender Spannung U1 eine Vergrößerung der d-Komponente des Statorstroms und bei sinkender Spannung U1 eine Verringerung der d-Komponente des Statorstroms vor. Der Wechselrichter 24 wird entsprechend von der Regelungseinrichtung 42 angesteuert, sodass bei steigender Spannung U1 ein größerer Strom in den Elektromotor 18 fließt und bei sinkender Spannung ein entsprechend verringerter Strom. Da es sich hierbei um die d-Komponente des Statorstroms handelt, hat diese Schwankung der Stromstärke keinen Einfluss auf das Drehmoment des Elektromotors 18. Stattdessen wird die in Form der d-Komponente des Statorstroms entnommene elektrische Energie als Verlustwärme in den Widerständen Rs der Statorwicklungen des Elektromotors 18 umgesetzt. Eine besonders vorteilhafte Ausprägung der Erfindung lässt sich erreichen, wenn es sich bei dem Elektromotor 18 um einen Synchronmotor mit hohem Statorwiderstand Rs handelt. Typische Motoren dieser Art sind beispielsweise langsam drehende bzw. langsam fahrende Direktantriebe. Sind solche Elektromotoren in der Schaltungsanordnung 10 vorhanden, so kann für die erforderliche Leistungsentnahme aus dem Zwischenkreis der hohe Statorwiderstand Rs für die erfindungsgemäße Dämpfung der Schwingungen in der Zwischenkreisspannung genutzt werden.

In FIG 2 ist die Eingangsimpedanz Z2 über der Frequenz f aufgetragen, wie sie sich am Anschluss 30 aus Sicht des Wechselrichters 26 aufgrund der dämpfenden Wirkung der Dämpfungseinrichtung 40 ergibt. Durch die aktive Zwischenkreisdämpfung mittels der Dämpfungseinrichtung 40 wird die Eingangsimpedanz Z2 im Bereich der Resonanzfrequenz f0 im Verhältnis zur Eingangsimpedanz Z1 um mehrere Größenordnungen abgesenkt, sodass die verbraucherseitige Leistung, wie sie der Elektromotor 20 aus dem Zwischenkreis 16 beziehen kann, deutlich erhöht werden kann. Der Wechselrichter 24 selbst profitiert in einem etwas geringerem Maße von der Dämpfungseinrichtung 40, d.h. bzgl. der Anschlüsse des Wechselrichters 24 an die Leitungen 36, 38 ergibt sich aufgrund des von der Dämpfungseinrichtung 40 beeinflussten Schaltverhaltens des Wechselrichters 24 ebenfalls eine Eingangsimpedanz, bei welcher an der Resonanzstelle f0 des Zwischenkreises 16 die Eingangsimpedanz im Verhältnis zur Eingangsimpedanz Z1 kleiner ist.

Vorzugsweise wird die Dämpfungseinrichtung 40 in einem Elektromotor 18 bereitgestellt, der im Verhältnis zum Elektromotor 20, der maßgeblich von der Dämpfung profitieren soll, eine geringere Nennleistung aufweist und auch nicht eine so große Positioniergenauigkeit ermöglichen muss wie der Elektromotor 20. Handelt es sich bei den Elektromotoren 18, 20 beispielsweise um Bestandteile derselben Fertigungsmaschine 22, so wird die Dämpfungseinrichtung 40 bevorzugt in einem Nebenantrieb verwendet, sodass für den Hauptantrieb 20 oder mehrere Hauptantriebe eine schwingungsgedämpften Gleichspannungsversorgung des Zwischenkreises bereitgestellt werden kann, ohne dass es eine Rückwirkung auf den von diesen angetriebenen Mechanismus gibt, also ohne eine Rückwirkung auf die Drehzahl oder das Drehmoment bzw. die Schubkraft, die auf den Mechanismus wirkt.

Eine vergleichbare Anordnung ergibt sich bei Kränen, die einen Linearantrieb für eine mechanische Schwingungsdämpfung des Kranaufbaus aufweisen. Ein solcher Linearantrieb stellt einen Nebenantrieb dar, der auch für die elektrische Dämpfung des Zwischenkreises 16 verwendet werden kann, über welchen die übrigen Kranantriebe zum Heben von Lasten und zum Drehen des Krans mit elektrischer Energie versorgt werden.

Anstelle des Elektromotors 20 kann auch eine andere elektrische Maschine oder ein anderer elektrischer Verbraucher am Anschluss 30 angeschlossen sein, der vom Zwischenkreis elektrische Leistung aufnimmt oder aber auch an diesen abgibt. Es können natürlich auch weitere elektrische Verbraucher oder Generatoren am Zwischenkreis 16 betrieben werden.

Bei der in FIG 1 gezeigten Topologie ist die Dämpfungseinrichtung 40 in unmittelbarer Nähe zu dem Verbraucher, für den die Eingangsimpedanz Z2 gedämpft werden soll, angeordnet. Möglich ist jedoch eine Vielzahl weiterer Topologien, bei denen die aktive Dämpfungseinrichtung 40 an einer anderen Stelle an den Zwischenkreis 16 angeschlossen sein kann. Beispielsweise kann die Dämpfungseinrichtung 40 auch bei einer elektrischen Maschine in der Nähe einer (in FIG 1 nicht dargestellten) Verzweigung des Zwischenkreises oder in der Nähe der Einspeisung 12 angeschlossen sein. Durch das Anschließen an einen Verzweigungspunkt ergibt sich der Vorteil, dass mit einer Dämpfungseinrichtung 40 eine Dämpfung für mehrere unterschiedliche elektrische Verbraucher am Zwischenkreis 16 erreicht wird.

Eine Besonderheit bei der bisher beschriebenen Dämpfung liegt darin, dass die Stabilität des Zwischenkreises 16 dadurch erreicht wird, dass dem Zwischenkreis 16 nur Energie entzogen werden kann, um Schwingungen in der Spannung U1 zu dämpfen, nicht aber zugeführt. Wird anstelle eines Synchronmotors eine Asynchronmaschine als Elektromotor 18 über die Dämpfungseinrichtung 40 betrieben, so ist es auch möglich im Hauptfeld der Asynchronmaschine (d-Komponente des magnetischen Drehfelds) Energie zwischenzuspeichern und diese zum Dämpfen von Schwingungen in der Spannung U1 auch an den Zwischenkreis 16 wieder abzugeben.

Das erfindungsgemäße Verfahren zum Dämpfen der Schwingung in der Zwischenkreisspannung kann auch mittels eines elektrischen Generator verwirklicht werden, bei welch dann ebenfalls die d-Komponente seines Statorstroms in der beschriebenen Weise gesteuert wird.

Zusammenfassend ist hier noch einmal festgestellt, dass es durch die aktive Dämpfung mittels der Dämpfungseinrichtung 40 möglich ist, auch verzweigte Gleichspannungszwischenkreise aufzubauen und dabei nur eine netzseitige Einspeiseinrichtung 12 zu verwenden. Die Erfindung ermöglicht es dabei, mit Hilfe von Standardkomponenten, die bereits in der Anlage vorhanden sind, die auftretenden Schwingungen in der Spannung U1 zu dämpfen. Zur Stabilisierung der Zwischenkreisspannung werden bevorzugt Antriebe verwendet, die in der Applikation vorhanden sind, aber keine hohe Genauigkeit im Gleichlauf oder der Positionierung erfüllen müssen. So können zur Stabilisierung der Zwischenkreisspannung etwa Antriebe verwendet werden, die installiert wurden, um mechanische Schwingungen zu dämpfen, wie es beispielsweise bei einem Kran der Fall sein kann. Neben der eigentlichen Verringerung der Eingangsimpedanzen Z2 nimmt auch insgesamt die Belastung der Komponenten im Zwischenkreis ab, wie etwa diejenige des Zwischenkreiskondensators C1, da durch das Dämpfen der Schwingungen in der Zwischenkreisspannung auch die zwischen den Leitungen 36, 38 des Zwischenkreises und den Komponenten ausgetauschten Wechselströme kleinere Amplituden aufweisen und hierdurch eine Erwärmung der Komponenten verringert wird.

## Patentansprüche

1. Verfahren zum Stabilisieren einer gleichgerichteten elektrischen Spannung (U1) in einem Zwischenkreis (16), in welchen die gleichgerichtete Spannung eingespeist und an welchem eine elektrische Maschine (18) betrieben wird, umfassend die Schritte:
- auf der Grundlage einer feldorientierten Regelung Einstellen einer ein Drehmoment oder eine Schubkraft bestimmenden q-Komponente eines Statorstroms der elektrischen Maschine (18) sowie einer senkrecht zur q-Komponente ausgerichteten d-Komponente des Statorstroms durch eine Regelungseinrichtung (42),
- Ermitteln einer Schwingung in einem zeitlichen Verlauf der Spannung (U1) durch eine Messeinrichtung (44),
- Einregeln eines Sollwertverlaufs für die d-Komponente des Statorstroms in Abhängigkeit von der ermittelten Schwingung mittels eines Reglers der Regelungseinrichtung (42), welcher dazu ausgelegt ist, die Schwingung zu dämpfen, zu welchem Zweck innerhalb einer Periode der Schwingung bei steigender Spannung dem Zwischenkreis auch mehr Energie entzogen und im Widerstand der Statorwicklungen in Wärme umgesetzt wird oder als die von der Regelungseinrichtung (42) geregelte elektrische Maschine (18) ein Asynchronmotor verwendet wird.

2. Verfahren nach Anspruch 1, wobei durch die elektrische Maschine (18) ein Nebenantrieb und durch eine weitere, ebenfalls am Zwischenkreis (16) betriebene elektrische Maschine ein Hauptantrieb gebildet ist und hierbei eine Betriebsgröße des Nebenantriebs (18), insbesondere eine Drehlage eines Rotors oder ein Drehmoment oder eine Schubkraft oder eine Drehzahl oder eine Geschwindigkeit, mit einer größeren Toleranz eingestellt wird als eine entsprechende Betriebsgröße des Hauptantriebs (20).

3. Verfahren nach Anspruch 1 oder 2, wobei durch die Regelungseinrichtung (42) der Sollwert mit einer Frequenz verändert wird, die in einem Frequenzbereich über 100 Hz, insbesondere über 1000 Hz, liegt, und hierdurch die Schwingungen des Spannungsverlaufs in diesem Frequenzbereich gedämpft werden.

4. Verfahren nach einem der vorhergehenden Ansprüche, wobei durch die Regelungseinrichtung (42) mittels des Reglers eingestellt wird, der frequenzselektiv auf die Resonanzfrequenz (f0) des Zwischenkreises (16) abgestimmt ist, und hierdurch der Sollwertverlauf mit einer vorbestimmten frequenzabhängigen Regelempfindlichkeit festgelegt wird.

5. Verfahren nach einem der vorhergehenden Ansprüche, wobei zum Ermitteln der Schwingungen ein Signal des zeitlichen Verlaufs der Spannung (U1) zunächst durch ein Hochpassfilter oder ein Bandpassfilter gefiltert wird und die Schwingungen auf der Grundlage des gefilterten Signals ermittelt werden.

6. Verfahren nach einem der vorhergehenden Ansprüche, wobei durch die Einspeiseeinrichtung (12) eine Wechselspannung eines elektrischen Versorgungsnetzes (14) gleichgerichtet wird und durch die Regelungseinrichtung (42) Schwingungen des Spannungsverlaufs der gleichgerichteten Spannung (U1) bei einer Harmonischen der Netzfrequenz des Versorgungsnetzes (14), insbesondere bei der sechsten Harmonischen im Falle eines dreiphasigen Versorgungsnetzes (14), gedämpft werden.

7. Verfahren nach einem der vorhergehenden Ansprüche, wobei als die durch die Regelungseinrichtung (42) geregelte elektrische Maschine (18) ein Synchronmotor für einen Direktantrieb betrieben wird.

8. Verfahren nach einem der Ansprüche 1 bis 6, wobei als die durch die Regelungseinrichtung (42) geregelte elektrische Maschine (18) ein Asynchronmotor betrieben wird und durch die d-Komponente des Statorstroms eine in einer d-Komponente eines magnetischen Drehfelds des Asynchronmotors gespeicherte Energiemenge eingestellt wird und hierbei bei betragsmäßig kleiner werdender Spannung Energie vom Drehfeld in den Zwischenkreis (16) und bei betragsmäßig größer werdender Spannung (U1) Energie vom Zwischenkreis (16) in das Drehfeld (46, 52) übertragen wird.

9. Schaltungsanordnung (10), bei welcher eine elektrische Maschine über einen Zwischenkreis (16) mit einer eine gleichgerichtete Spannung (U1) in dem Zwischenkreis (16) erzeugenden Erzeuger (12) gekoppelt ist, **gekennzeichnet durch** eine Dämpfungseinrichtung (40), die eine Messeinrichtung (44), mittels der eine Schwingung in einem zeitlichen Verlauf der gleichgerichteten Spannung (U1) ermittelbar ist, sowie eine Regelungseinrichtung (42) zum Regeln eines Statorstromes der elektrischen Maschine (18) umfasst und die dazu ausgelegt ist, ein Verfahren nach einem der vorhergehenden Ansprüche durchzuführen.

10. Schaltungsanordnung (10) nach Anspruch 9, wobei die elektrische Maschine (18) ein Linearantrieb einer mechanischen Schwingungsdämpfung eines Kranes ist.

11. Schaltungsanordnung (10) nach Anspruch 9, wobei an den Zwischenkreis (16) zusätzlich ein Elektromotor (20) einer Produktionsmaschine (22) angeschlossen ist und der Elektromotor (20) hierbei einen Hauptantrieb der Produktionsmaschine (22) darstellt, welcher bezüglich einer Betriebgröße, insbesondere einer Drehzahl, einem Drehmoment, eine Schubkraft oder einer Drehlage, für einen Betrieb mit einer vorbestimmten Genauigkeit ausgelegt ist, und wobei die von der Dämpfungseinrichtung (40) geregelte elektrische Maschine (18) einen Nebenantrieb der Produktionsmaschine (22) darstellt, der für einen Betrieb mit einer geringeren Genauigkeit bezüglich der Betriebsgröße ausgelegt.

## Claims

1. Method for stabilising a rectified electric voltage (U1) in an intermediate circuit (16), into which the rectified voltage is fed and on which an electric machine (18) is operated, comprising the steps:
- setting a q-component, which determines a torque or a thrust, of a stator current of the electric machine (18) and a d-component, which is aligned perpendicularly to the q-component, of the stator current on the basis of a field-oriented regulation system by way of a regulating device (42),
- detecting a vibration in a temporal sequence of the voltage (U1) by a measuring device (44),
- specifying a setpoint sequence for the d-component of the stator current as a function of the detected vibration by means of a regulator of the regulating device (42), which is configured to dampen the vibration, for which purpose, within a period of the vibration when the voltage rises, even more energy is drawn from the intermediate circuit and converted into heat in the resistor of the stator windings or an asynchronous motor is used as the electric machine (18) regulated by the regulating device (42).

2. Method according to claim 1, wherein an auxiliary drive is formed by the electric machine (18) and a main drive is formed by a further electric machine likewise operated on the intermediate circuit (16) and in this case an operating variable of the auxiliary drive (18), in particular a rotational position of a rotor or a torque or a thrust or a rotational speed or a speed, is set with a higher tolerance than a corresponding operating variable of the main drive (20).

3. Method according to claim 1 or 2, wherein the setpoint value is changed by the regulating device (42) with a frequency which lies in a frequency range above 100 Hz, in particular above 1000 Hz, and the vibrations of the voltage sequence in said frequency range are dampened as a result.

4. Method according to one of the preceding claims, wherein the setting is effected by the regulating device (42) by means of the regulator, which is modulated in a frequency-selective manner to the resonant frequency (f0) of the intermediate circuit (16), and the setpoint sequence is defined with a predetermined frequency-dependent regulation sensitivity as a result.

5. Method according to one of the preceding claims, wherein in order to detect the vibrations, a signal of the temporal sequence of the voltage (U1) is initially filtered by a highpass filter or a band-pass filter and the vibrations are detected on the basis of the filtered signal.

6. Method according to one of the preceding claims, wherein an alternating voltage of an electrical supply network (14) is rectified by the feeder device (12) and vibrations of the voltage sequence of the rectified voltage (U1) are dampened by the regulating device (42) at a harmonic of the network frequency of the supply network (14), in particular at the sixth harmonic in the case of a three-phase supply network (14).

7. Method according to one of the preceding claims, wherein a synchronous motor for a direct drive is operated as the electric machine (18) regulated by the regulating device (42).

8. Method according to one of claims 1 to 6, wherein an asynchronous motor is operated as the electric machine (18) regulated by the regulating device (42) and an energy quantity stored in a d-component of a magnetic rotating field of the asynchronous motor is set by the d-component of the stator current and, when the voltage levels are falling according to amount, energy is transferred from the rotating field into the intermediate circuit (16) and, when the voltage (U1) levels are rising according to amount, energy is transferred from the intermediate circuit (16) into the rotating field (46, 52) as a result.

9. Circuit arrangement (10), in which an electric machine is coupled via an intermediate circuit (16) to a generator (12) generating a rectified voltage (U1) in the intermediate circuit (16), c h a r a c t e r i s e d by a dampening device (40) which comprises a measuring device (44), by means of which a vibration in a temporal sequence of the rectified voltage (U1) can be detected, and a regulating device (42) for regulating a stator current of the electric machine (18) and which is configured to perform a method according to one of the preceding claims.

10. Circuit arrangement (10) according to claim 9, wherein the electric machine (18) is a linear drive of a mechanical vibration dampening of a crane.

11. Circuit arrangement (10) according to claim 9, wherein an electric motor (20) of a production machine (22) is additionally connected to the intermediate circuit (16) and the electric motor (20) represents a main drive of the production machine (22) in this case, which is configured for an operation at a predetermined accuracy with respect to an operating variable, in particular a rotational speed, a torque, a thrust or a rotational position, and wherein the electric machine (18) regulated by the dampening device (40) represents an auxiliary drive of the production machine (22), which is configured for an operation at a lower accuracy with respect to the operating variable.

## Revendications

1. Procédé de stabilisation d'une tension (U1) électrique redressée dans un circuit ( 16 ) intermédiaire, dans lequel on injecte la tension redressée et sur lequel on fait fonctionner une machine ( 18 ) électrique, comprenant les stades :
- sur la base d'une régulation par le champ, réglage d'une composante q déterminant un couple de rotation ou une force de poussée d'un courant statorique de la machine ( 18 ) électrique, ainsi qu'une d'une composante d dirigée perpendiculairement à la composante q du courant statorique par un dispositif ( 42 ) de régulation,
- détermination d'une oscillation dans une variation en fonction du temps de la tension (U1) par un dispositif ( 44 ) de mesure,
- réglage d'une courbe de valeur de consigne pour la composante d du courant statorique en fonction de l'oscillation déterminée au moyen d'un régleur du dispositif ( 42 ) de régulation conçu pour amortir l'oscillation, en vue de quoi, dans une période d'oscillation, alors que la tension est croissante, on soutire du circuit intermédiaire également plus d'énergie et on la transforme dans la résistance des enroulements statoriques en chaleur ou on utilise un moteur asynchrone comme machine ( 18 ) électrique régulée par le dispositif ( 42 ) de régulation.

2. Procédé suivant la revendication 1, dans lequel il est formé, par la machine ( 18 ) électrique, un entraînement auxiliaire et, par une autre machine électrique fonctionnant également sur le circuit ( 16 ) intermédiaire, un entraînement principal et on règle ainsi une grandeur de fonctionnement de l'entraînement ( 18 ) secondaire, notamment une position à rotation d'un rotor ou un couple de rotation ou une force de poussée ou une vitesse de rotation ou une vitesse avec une tolérance plus grande qu'une grandeur de fonctionnement correspondante de l'entraînement ( 20 ) principal.

3. Procédé suivant la revendication 1 ou 2, dans lequel on modifie, par le dispositif ( 42 ) de régulation, la valeur de consigne à une fréquence qui est dans une plage de fréquence au-dessus de 100 Hz, notamment au-dessus de 1 000 Hz, et on amortit ainsi les oscillations de la courbe de tension dans cette plage de fréquence.

4. Procédé suivant l'une des revendications précédentes, dans lequel on règle, par le dispositif ( 42 ) de régulation, au moyen du régleur, qui est accordé sélectivement en fréquence à la fréquence ( f0 ) de résonance du circuit ( 16 ) intermédiaire, et on fixe ainsi la courbe de valeur de consigne, avec une sensibilité de réglage définie à l'avance, qui dépend de la fréquence.

5. Procédé suivant l'une des revendications précédentes, dans lequel, pour déterminer les oscillations, on filtre un signal de la courbe en fonction du temps de la tension ( U1 ), d'abord par un filtre passe-haut ou par un filtre passe-bande, et on détermine les oscillations sur la base du signal filtré.

6. Procédé suivant l'une des revendications précédentes, dans lequel, par le dispositif ( 12 ) d'injection, on redresse une tension alternative d'un réseau ( 14 ) d'alimentation électrique et, par le dispositif ( 42 ) de régulation, on amortit des oscillations de la courbe de tension de la tension ( U1 ) redressée pour un harmonique de la fréquence du réseau ( 14 ) d'alimentation, notamment pour le sixième harmonique, dans le cas d'un réseau ( 14 ) d'alimentation triphasé.

7. Procédé suivant l'une des revendications précédentes, dans lequel on fait fonctionner un moteur synchrone pour un entraînement direct comme machine ( 18 ) électrique régulée par le dispositif ( 42 ) de régulation.

8. Procédé suivant l'une des revendications 1 à 6, dans lequel on fait fonctionner un moteur asynchrone comme machine ( 18 ) électrique régulée par le dispositif ( 42 ) de régulation et on règle, par la composante d du courant statorique, une quantité d'énergie accumulée dans une composante d dans un champ magnétique tournant du moteur asynchrone, et ainsi on transmet, pour une tension devenant plus petite en valeur absolue, de l'énergie du champ tournant au circuit ( 16 ) intermédiaire et, pour une tension ( U1 ) devenant plus grande en valeur absolue, de l'énergie du circuit ( 16 ) intermédiaire au champ ( 46, 52 ) tournant.

9. Montage ( 10 ), dans lequel une machine électrique est couplée par un circuit ( 16 ) intermédiaire à un producteur ( 12 ) produisant une tension (U1) redressée dans le circuit ( 16 ) intermédiaire, **caractérisé**
**par** un dispositif ( 40 ) d'amortissement, qui comprend un dispositif ( 44 ) de mesure, au moyen duquel une oscillation dans la courbe en fonction du temps de la tension (U1) redressée, peut être déterminée, ainsi qu'un dispositif ( 42 ) de régulation pour réguler un courant statorique de la machine ( 18 ) électrique, et qui est conçu pour effectuer un procédé suivant l'une des revendications précédentes.

10. Montage ( 10 ) suivant la revendication 9, dans lequel la machine ( 18 ) électrique est un entraînement linéaire d'un amortissement d'oscillation mécanique d'une grue.

11. Montage ( 10 ) suivant la revendication 9, dans lequel au circuit ( 16 ) intermédiaire est raccordé, en outre, un moteur ( 20 ) électrique d'une machine ( 22 ) de production, et le moteur ( 20 ) électrique représente un entraînement principal de la machine ( 22 ) de production, qui, en ce qui concerne une grandeur de fonctionnement, notamment une vitesse de rotation, un couple de rotation, une force de poussée ou une position en rotation, est conçue pour un fonctionnement à une précision déterminée à l'avance et dans lequel la machine ( 18 ) électrique régulée par le dispositif ( 40 ) d'amortissement, représente un entraînement secondaire de la machine ( 22 ) de production, qui est conçue pour un fonctionnement à une précision plus petite en ce qui concerne la grandeur de fonctionnement.
